# EUROPEAN PATENT APPLICATION

(11) **EP 3 339 346 A1**
(43) Date of publication of application: **27.06.2018**
(21) Application number: 17208339.6
(22) Date of filing: 19.12.2017
(51) Int. Cl.: C08G 18/76, C04B 26/16, C08G 18/32, C08G 18/36, C09J 175/04

(54) **PU HYBRID AS BEDDING MORTAR, ADHESIVE, JOINT GROUT OR JOINT FILLER**

(30) Priority: 21.12.2016 EP 16205784
(71) Applicant: SIKA TECHNOLOGY AG, 6340 Baar (CH)
(72) Inventor: Gimeno Santos, Patricia, 70186 Stuttgart (DE); Kaddatz, Carola, 71570 Oppenweiler (DE); Willmann, Jörg, 70178 Stuttgart (DE); Schreiber, Jürgen, 71254 Ditzingen (DE); Hilgenbrink, Bernhard, 48565 Steinfurt (DE)
(74) Representative: Sika Patent Attorneys

(57) **Abstract**

The present invention relates to a method for laying a floor covering on a subfloor, the method comprises applying a bonding material on the subfloor, and placing the floor covering or a plurality of floor covering elements on the applied bonding material and optionally grouting joints between the floor covering elements with a joint material, wherein a mixture of the components of a multi-component composition comprising A) a polyol component comprising at least one polyol and water, B) a hardener component comprising at least one polyisocyanate, and C) a solid component comprising a hydraulic binder and one or more aggregates, is used as the bonding material and/or the joint material.

The method provides a floor covering, in particular a tiled floor covering, with high thermal, chemical and mechanical resistance. The floor coverings obtained are suitable for an industrial floor covering, in particular for a production place in food or drink industry, life science industry, chemical industry or heavy industry.

## Description

### Technical field

The invention relates to floor covering systems, in particular tiled floorings.

### Background of the invention

Today resin adhered tiled floors in severe conditions are applied by using epoxy resin in a vibrating method or as a thin bed application. These resins might then filled with quartz sand on site. Most of the epoxy resins are water emulsified. The epoxy resin is also used as joint material for the tiled floor. Manufacturer of these resins are widespread. Typical applications are in the field of the life science industries, such as pharmaceutical industry, and food or drink industries.

These epoxy resins are limited with regards to thermal, chemical and mechanical resistance. For example, in the typically severe conditions in food and drink industry, e.g. in bottling, dairy and meat production, the joint filler of the floor covering needs to be replaced in a regular interval and any damages or leaks will attack the bedding mortar which will result in a complete failure of the system. These systems are not suitable for flooring systems where even more rigid conditions with respect to thermal, chemical and mechanical resistance are required, such as in chemical industries or heavy industries.

Furthermore, the curing time of these water emulsified resins is very long since they have a long open time to ease application. Unfortunately, this is also going to delay the time into service. Standard waiting time is approx. 7 days before this epoxy resin can be chemical loaded. Lower temperatures will give longer waiting times.

Polyurethane (PU) hybrid systems are known and generally used as coatings or floor coverings.

JP 2005-213827 A relates to a method, where an aqueous urethane resin cement composition is applied on a surface and subsequently adhesive layer containing synthetic resin or cement mortar is formed, as desired, to construct a floor finishing material thereon, such as tile, flooring and carpet.

JP 2005-273147 A relates to a subfloor having an epoxy resin undercoat and a middle coat layer made of aqueous urethane resin cement composition, on which floor finishing materials such as synthetic resin, tile carpet and flooring are formed.

US 2016/244367 A1 is concerned with a multicomponent composition comprising a solid component with calcined paper sludge and one or more aggregates and optionally cement, a binder component comprising an organic binder selected from one or more polyols, and a hardener component comprising an isocyanate hardener for polyol, wherein the multi-component composition further comprises water.

### Summary of the invention

Therefore, the object of the invention was to overcome the problems of the prior art discussed above, in particular with respect to the use of epoxy resins for the preparation of floor coverings. In particular, the object of the present invention is to provide a method for preparing floor coverings with an improved thermal, chemical and mechanical resistance in order to increase durability under severe conditions. The floor coverings should also withstand rigid conditions encountered in chemical industries and heavy industries. Moreover, curing times of the materials used should be shortened in order to reduce manufacturing duration and costs.

Surprisingly, this object could be achieved by using a polyurethane cementitiuous hybrid material as a bonding material and/or joint material in the manufacture of floor coverings.

Accordingly, the present invention relates to a method for laying a floor covering on a subfloor, the method comprises applying a bonding material on the subfloor, and placing the floor covering or a plurality of floor covering elements on the applied bonding material and optionally grouting joints between the floor covering elements with a joint material, wherein a mixture of the components of a multi-component composition comprising A) a polyol component comprising at least one polyol and water, B) a hardener component comprising at least one polyisocyanate, and C) a solid component comprising a hydraulic binder and one or more aggregates, is used as the bonding material and/or the joint material.

The use of the multi-component composition based on polyurethane hybrid technology offers great advantages over the use of water emulsified epoxy resins, such as higher strength, higher thermal, chemical and mechanical resistance and cost effectiveness. This will allow the systems to be applied in wider field of applications. It is not only safer but also more cost effective.

Therefore, the inventive method enables the provision of a floor covering, in particular tiled floorings, with an improved thermal, chemical and mechanical resistance. Accordingly, floor coverings with an increased durability under severe conditions such as in life science or food and drink industry can be provided. Furthermore, it will widen the field of application to further industries such as chemical and heavy industry where even more rigid conditions are encountered.

A particular benefit is improved adhesive tensile strength which can be achieved. Thus, tensile strengths of C1 classification according to EN 12004 classification for cement tile adhesives (≥0.5 N/mm²) or even of the C2 classification (≥1.0 N/mm²) could be possible.

When the multi-component composition is used as bonding material, e.g. as a embedding mortar or adhesive, respectively, the benefits are in particular high adhesion strength, good moisture tolerance, higher chemical and mechanical resistance. Moreover, curing is fast, while open time of e.g. about 1 hour is available. These benefits result in faster operation, longer service life also under rigid conditions, and cost effective preparation.

When the multi-component composition is used as joint material, e.g. as a joint filler or joint grout, the benefits are in particular higher chemical and mechanical resistance, and faster curing. These benefits result in faster operation, and longer service life also under rigid conditions.

The invention also relates to the floor coverings obtainable by the method of the invention, and to the respective use of the multi-component composition as bonding material and/or joint material in the preparation of floor coverings. Preferred embodiments are recited in the dependent claims.

### Detailed description of the invention

Substance names beginning with "poly", such as e.g. polyol or polyisocyanate, designate substances which formally contain, per molecule, two or more of the functional groups occurring in their names.

The term "open time" is understood to mean the duration of processability when the components are mixed with each other. The end of the open time is usually associated with viscosity increase of the composition such that processing of the composition is no longer possible.

The average molecular weight is understood to mean the number average molecular weight, as determined using conventional methods, preferably by gel permeation-chromatography (GPC) using polystyrene as standard (Mw), styrene-divinylbenzene gel with porosity of 100 Angstrom, 1000 Angstrom and 10000 Angstrom as the column and tetrahydrofuran as a solvent, at 35°C.

At first, the multi-component composition used according to the invention is explained. The multi-component composition comprises three or more individual components. The components are stored separately in order to avoid spontaneous reaction. The components may be assembled together as a package. For use the components are mixed with each other. The multi-component composition preferably consists of three components. Optionally however, one or more additional components may be included for specific purposes. For instance, an additional component comprising coloring agents such as pigments may be used for coloring purposes. Another example of an additional component is an extender.

### Polyol component

The polyol component comprises one or more polyols, and water. Optionally, one or more additives may be added to the polyol component. The polyol component is preferably a liquid component. The polyol component may be viscous but is generally pourable.

Examples of suitable polyols are polyoxyalkylenepolyols, also referred to as "polyetherpolyols", polyesterpolyols, polycarbonatepolyols, poly(meth)acrylate polyols, polyhydrocarbon-polyols, polyhydroxy-functional acrylonitrile/butadiene copolymers and mixtures thereof, in particular diols thereof, and mixtures thereof.

Examples of polyetherpolyols are polyoxyethylenepolyols, polyoxypropylenepolyols and polyoxybutylenepolyols, in particular polyoxyethylenediols, polyoxypropylenediols, polyoxybutylenediols, polyoxyethylenetriols and polyoxypropylenetriols. Polyoxyalkylenediols or polyoxyalkylenetriols having a degree of unsaturation of less than 0.02 meq/g and having an average molecular weight in the range from 1000 to 30000 g/mol and polyoxyethylenediols, polyoxyethylenetriols, polyoxypropylenediols and polyoxypropylenetriols having an average molecular weight of from 400 to 8000 g/mol are suitable.

Further examples of polyetherpolyols are so-called ethylene oxide-terminated ("EO-endcapped", ethylene oxide-end-capped) polyoxypropylenepolyols, styrene-acrylonitrile-grafted polyetherpolyols, e.g. Lupranol® from BASF Polyurethanes GmbH, Germany.

Particularly preferred polyols to be used in the present invention are polyhydroxy-functional fats and oils, for example natural fats and oils, such as castor oil, or polyols obtained by chemical modification of natural fats and oils, so-called oleochemical polyols. It is particularly preferred that the polyol component comprises castor oil as polyol.

Examples of chemically modified natural fats and oils are polyols obtained from epoxypolyesters or epoxypolyethers obtained, for example, by epoxidation of unsaturated oils, by subsequent ring opening with carboxylic acids or alcohols, polyols obtained by hydroformylation and hydrogenation of unsaturated oils, or polyols which are obtained from natural fats and oils by degradation processes, such as alcoholysis or ozonolysis, and subsequent chemical linkage, for example by trans esterification or dimerization, of the degradation products thus obtained or derivatives thereof. Suitable degradation products of natural fats and oils are in particular fatty acids and fatty alcohols and fatty acid esters, in particular the methyl esters (FAME), which can be derivatized, for example, by hydroformylation and hydrogenation to give hydroxy-fatty acid esters.

The polyols mentioned above usually have a relatively high molecular weight, for instance, an average molecular weight of from 250 to 30000 g/mol, in particular from 1000 to 30000 g/mol, and/or an average OH functionality in the range from 1.6 to 3.

Further examples of suitable polyols are low molecular weight di- or polyhydric alcohols, e.g., with a molecular weight of less than 250 g/mol. Examples thereof are 1,2-ethanediol, 1,2- and 1,3-propanediol, neopentylglycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, hydrogenated bisphenol A, dimeric fatty alcohols, 1,1,1-trimethylolethane, 1,1,1-trimethylolpropane, glycerol, pentaerythritol, sugar alcohols, such as xylitol, sorbitol or mannitol, sugars, such as sucrose, other alcohols having a higher functionality, low molecular weight alkoxylation products of the abovementioned di- and polyhydric alcohols, and mixtures thereof.

While said low molecular weight di- or polyhydric alcohols may be used as the polyol, the use of the polyols mentioned above having a high molecular weight is preferred. In a preferred embodiment at least one high molecular weight polyol and at least one low molecular weight di- or polyhydric alcohol are used in combination. As mentioned, a low molecular weight polyol is considered to have a molecular weight of less than 250 g/mol, whereas a high molecular weight polyol is considered to have an average molecular weight of 250 g/mol or more.

In a preferred embodiment the polyol component comprises at least one low molecular weight polyol, preferably in combination with at least one high molecular weight polyol, in particular castor oil.

Particularly preferred is a combination of one or more polyhydroxy-functional fats and oils, such natural fats and oils, or polyols obtained by chemical modification of natural fats and oils, in particular castor oil, and one, two or more low molecular weight di- or polyhydric alcohols. In such combinations, the one or more polyols having a high molecular weight are usually used in higher amounts than the at least one low molecular weight di- or polyhydric alcohol.

Apart from the at least one polyol and water, the polyol component may contain further additives. Such additives are commonly used, if desired, and typically known to the persons skilled in the art. Examples of optional further additives are plasticizers, pigments, adhesion promoters, such as silanes, e.g. epoxysilanes, (meth)acrylatosilanes and alkylsilanes, stabilizers against heat light and UV radiation, thixotropic agents, flow improving additives, flame retardants, surface active agents such as defoamers, wetting agents, flow control agents, deaerating agents, biocides and emulsifiers.

Preferably used optional additives for the polyol component are one or more of plasticizers, such as benzoates, benzyl phthalates, e.g. Santicizer®160, and diisopropylbenzene, e.g. Benzoflex®9-88; pigments, such as inorganic and organic pigments, e.g. Bayferrox® and Heucosin®; defoamers, such as solvent free and silicon free defoamers, e.g. solvent free and silicon free polymer-based defoamers, and polyorganosiloxanes, e.g. Tego®Airex and Efka®; and emulsifiers such as calcium hydroxide.

### Hardener component

The hardener component comprises one or more polyisocyanates. The hardener component is preferably a liquid component. The hardener component may be viscous but is generally pourable.

Such polyisocyanates are commercially available and widely used as hardener for polyols. Examples for suitable polyisocyanates are aliphatic or aromatic polyisocyanates such as toluene diisocyanate (TDI), hexamethylene diisocyanate, isophorone diisocyanate (IPDI) such as Vestamat®T 1890, methylene diphenyl diisocyanate and derivatives of these polyisocyanates, wherein methylene diphenyl diisocyanate and its derivatives are preferred.

Monomeric and polymeric methylene diphenyl diisocyanate is most preferred. In the following, methylene diphenyl diisocyanate is abbreviated as MDI as usual. MDI is a useful compound, e.g. as a starting material for polyurethane production, and produced worldwide in millions of tons annually. A plurality of different product grades of MDI is available. "Methylene diphenyl diisocyanate" as this term is used in the present invention, include, depending on its grade, monomeric and polymeric methylene diphenyl diisocyanate.

MDI is available in the form of three different isomers, namely 4,4'-methylene diphenyl diisocyanate (4,4'-MDI), 2,4'-methylene diphenyl diisocyanate (2,4'-MDI), and 2,2'-methylene diphenyl diisocyanate (2,2'-MDI). Commercially available MDI can be classified into monomeric MDI (also designated MMDI) and polymeric MDI (PMDI) referred to as technical MDI. Polymeric MDI is the raw product of MDI synthesis containing MDI isomers and oligomeric species. Monomeric MDI is obtained from polymeric MDI by purification.

Monomeric MDI refers to "pure" MDI including products of a single MDI isomer or of isomer mixtures of two or three MDI isomers. The isomeric ratio can vary in wide ranges. For instance, 4,4'-MDI is a colorless to yellowish solid having a melting point of 39.5°C. Commercial monomeric MDI is often a mixture of 4,4'-MDI, 2,4'-MDI and typically very low levels of 2,2'-MDI.

Polymeric MDI includes oligomeric species. Usually MDI isomers are also included in polymeric MDI. Thus, polymeric MDI may contain a single MDI isomer or isomer mixtures of two or three MDI isomers, the balance being oligomeric species. Polymeric MDI tends to have isocyanate functionalities of higher than 2. The isomeric ratio as well as the amount of oligomeric species can vary in wide ranges in these products. For instance, polymeric MDI may typically contain about 30 to 80 wt.% of MDI isomers, the balance being said oligomeric species. As in the case of monomeric MDI, the MDI isomers are often a mixture of 4,4'-MDI, 2,4'-MDI and very low levels of 2,2'-MDI. Polymeric MDI is typically a brown or dark amber liquid at room temperature (23°C).

The oligomeric species are oligomers usually having a NCO functionality of 3 or higher. The oligomeric species are a result of the synthesis process and can be represented by the following formula 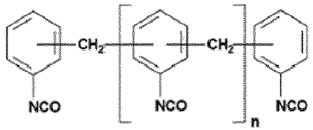 wherein n is 1 to 4 and higher. The amount of the homologues decreases with increasing chain length. The total content of homologues with n higher than 4 is generally not very high.

The hardener component comprising at least one polyisocyanate may optionally comprise one or more further additives, e.g. solvents, e.g. in relatively small amounts, e.g. up to 20 or up to 10 wt.% of the additives all together, preferably up to 5 wt.% and more preferably up to 2 wt.% based on the total weight of the hardener component. Suitable solvents include but are not limited to esters, ketones, hydrocarbons and chlorinated hydrocarbons. If MDI is used, it is generally preferred however, that the hardener component comprising an isocyanate hardener essentially consists of MDI, i.e. monomeric MDI and/or polymeric MDI, e.g. with an amount of other additives of less than 2 wt.%. Since the MDI products are technical products, they may, of course, include low quantities of impurities.

### Solid component

The solid component comprises a hydraulic binder and one or more aggregates. The solid component is preferably a powder.

A hydraulic binder is a substantially inorganic or mineral material or blend, which hardens when mixed with water. Hydraulic binders also encompasses latent hydraulic binders or pozzolanic binders which usually requires activation, e.g. by the presence of lime, in order to show hydraulic properties. All hydraulic binders known to those skilled in the art are suitable.

Typical examples of hydraulic binders are at least one of cement, e.g. Portland cement, aluminate cement, fly ash, granulated blast furnace slag, lime, such as limestone and quicklime, rice husk, calcined paper sludge, fumed silica and pozzolana or a mixture thereof. The hydraulic binder preferably comprises cement, in particular Portland cement. Hydraulic binders such as cement often include in addition calcium sulfate, such as gypsum, anhydrite and hemihydrate.

The solid component further comprises one or more aggregates. Aggregates are chemically inert, solid particulate materials. Aggregates come in various shapes, sizes, and materials ranging from fine particles of sand to large, coarse rocks. Examples of suitable aggregates are sand, such as silica sand, gravel, and crushed stone, slag, calcined flint, lightweight aggregates such as clay, pumice, perlite, foamed glass, and vermiculite. Sand, in particular silica sand, is preferably used to reach the workability expected and to obtain a smooth surface.

The grain size of the aggregates may vary depending on the application, but is preferably rather small, e.g. not more than 6 mm, preferably not more than 4 mm. The aggregate may have, for instance, a grain size in the range of 0.05 to 4 mm, wherein sand, in particular silica sand, having a grain size in the range of 0.1 to 2 mm is particularly preferred. For instance, sand having a grain size ranging from 0.3 to 0.8 mm or from 0.1 to 0.5 mm can be advantageously used in the present invention. The grain size range can be determined, e.g. by sieve analysis.

In a preferred embodiment, the solid component also include calcium hydroxide and/or calcium oxide, e.g. hydrated lime (Ca(OH)₂) and/or quicklime (CaO).

The solid component may optionally comprise one or more additives, which are commonly used, if desired, and typically known to the persons skilled in the art of cementitious applications. Examples of suitable additives, which may be optionally used in the solid component are superplastizicer such as polycarboxylate ether (PCE); oil such as mineral oil, paraffin oil and organic oil, cellulose fibers, and inorganic or organic pigments.

### Additional component or ingredient

In a preferred embodiment the multi-component composition further comprises at least one extender. An extender is an additive which has usually thixotropic properties and can be used to adjust the rheological properties of coating compositions. An extender can be used e.g. to apply the multi-component composition on vertical surfaces without run off. Extenders can be used in form of a liquid or a powder. The extender preferably has thixotropic properties. Extenders are commercially available and the skilled person is familiar therewith.
The at least one extender may be contained in an additional component of the multi-component composition which is different from polyol component A), hardener component B) and solid component C) or it may be contained in one of these components, preferably in polyol component A) and/or solid component C). If contained in an additional component, the additional component may consist of the at least one extender or may comprise the extender, e.g. in form of a dispersion.

Examples of a suitable extender are inorganic or organic material in form of powder, beads or fibers, e.g. made of organic polymer, glass, mineral, or synthetic inorganic material, such as polymer fibers, polymer powder, glass fibers or glass beads. As illustrative examples of suitable minerals or synthetic inorganic materials calcite, chalk, dolomite, calcium carbonate, precipitated calcium carbonate, talc, bentonite, mica, kaolin, precipitated silica, or aluminium hydroxide may be mentioned, typically used in form of a powder or a dispersion of such powder. Particular suitable extenders are organic polymer fibres or organic polymer powder which may be dispersible in water.

An extender can surprisingly improve the adhesive tensile strength of the systems when it is used in the multi-component composition.

### Suitable proportions for the multi-component composition

As to the mixing ratio of the components of the multi-component composition, the weight ratio of the polyol component to the hardener component is e.g. in the range of from 0.8 to 1.4, and preferably in the range of from 1.0 to 1.2.

The initial flowability of the mixture of the multi-component composition can be suitably adjusted by variation of the proportion of the solid component. The amount of the solid component is e.g. in the range of from 80 to 35 % by weight, preferably 75 to 40 % by weight, based on the total weight of the multi-component composition.

For use as bonding material a relatively high proportion of the solid component is usually suitable. The same proportion may also be suitable when it is used as joint material, e.g. when grouting is effected by injection. However, a lower proportion may be suitable when used as joint material, e.g. when a higher flowability is desired, in particular when grouting is effected by spreading. Thus, when the multi-component composition is used as bonding material, the amount of the solid component is preferably in the range of from 80 to 60% by weight, preferably 75 to 65% by weight, more preferably 75 to 67,5% by weight, based on the total weight of the multi-component composition. A higher proportion of the solid component improves the adhesive tensile strength of the systems. When the multi-component composition is used as joint material, the amount of the solid component is preferably in the range of from 65 to 35% by weight, preferably 60 to 40% by weight, based on the total weight of the multi-component composition.

The multi-component composition of the invention is preferably formulated such that the content of the one or more polyisocyanates, preferably MDI, is in the range of 8 to 25% by weight, preferably 10 to 20% by weight, based on the total weight of the multi-component composition.

The multi-component composition is preferably formulated such that the content of the hydraulic binder, preferably comprising cement, is in the range of 10 to 30% by weight, preferably in the range of 15 to 25% by weight, based on the total weight of the multi-component composition. Said content of the hydraulic binder also includes the weight of calcium hydroxide and/or calcium oxide, if present.

Further, the multi-component composition is preferably formulated such that the weight ratio of water to hydraulic binder is in the range of 0.12 to 0.35, preferably in the range of 0.15 to 0.25.

The molar ratio of NCO groups to alcoholic OH groups (NCO/OH ratio) in the multi-component composition is preferably in the range of from 3 to 5 and more preferably in the range of from 3.5 to 4.5. Said molar ratio further improves compressive strength of the finished product. The molar ratio can easily be determined via the equivalent weights of the polyols and polyisocyanates used.

The polyol component is preferably formulated such that the water content is in the range of 10 to 40% by weight, preferably 20 to 30% by weight, and/or the content of one or more polyols, preferably including castor oil, is 35 to 55, preferably 38 to 45% by weight, based on the total content of the polyol component. In a preferred embodiment at least one high molecular weight polyol, preferably castor oil, and at least on low molecular polyol are contained in the polyol component. In this case, the content of high molecular weight polyol such as castor oil is e.g. in the range of 33 to 45% by weight, and the content of low molecular weight polyol is e.g. in the range of 2 to 10% by weight, based on the total content of polyol component.

The solid component (C) is for instance formulated such that the content of the hydraulic binder, including calcium hydroxide and/or calcium oxide, if present, is in the range of 10 to 40% by weight, preferably 20 to 35% by weight, based on the total weight of the solid component, wherein it is preferred that the hydraulic binder comprises cement. The content of one or more aggregates is e.g. in the range of 60 to 90 wt.%, preferably in the range of 65 to 80 wt.%, based on the total weight of solid component. The solid component may also comprise one or more additives as mentioned above.

For the preferred embodiment, where the multi-component composition comprises at least one extender, the amount of the at least extender is e.g. in the range of 0.05 to 2.0% by weight, preferably 0.1 to 1.5% by weight, based on the total weight of components A), B) and C) excluding the extender. As mentioned above the extender may be contained in an additional component different from polyol component A), hardener component B) and solid component C). If the at least one extender is contained in one of components A), B) or C), the total weight of total weight of components A), B) and C) excluding the extender contained therein is taken as the base.

### Mixture

For using the multi-component composition as a bonding material and/or a joint material, the components of the composition are mixed before usage. If the multi-component composition is used as bonding material and joint material, the multi-component composition with identical formulation may be used for both applications but it is also possible and often suitable to use multi-component compositions with different formulations, e.g. with respect to the proportion of the solid component as explained above.

When the components are mixed together, hydration and curing reactions begin so that the composition is to be processed within the open time after mixing the components. When the components are mixed, the hydraulic binder reacts with water. This reaction is generally called hydration. Upon the reaction with water, the hydraulic binder is cured to a solid material. Moreover, the one or more polyols of the polyol component and the one or more polyisocyanates of the hardener component react upon mixture so that a polyurethane as a organic binder is also cured. Thus, upon curing a hybrid solid material comprising an inorganic portion and an organic portion in which the aggregates are bound is formed.

### Method for the manufacture of the floor covering

The method of the invention is a method for laying a floor covering on a subfloor, wherein a mixture of the multi-component composition is used as the bonding material and/or as the joint material. The bonding material is preferably an embedding mortar or adhesive, in particular when the multi-component composition is used. The joint material is preferably a joint grout or joint filler, in particular when the multi-component composition is used.

In a preferred embodiment, the mixture of the multi-component composition is used as the bonding material. In a particular preferred embodiment, the mixture of the multi-component composition is used as the bonding material and as the joint material. It is, however, also possible that the mixture of the multi-component composition is used only as the joint material. It goes without saying that in this case the inventive method also includes the process step of grouting joints between the floor covering elements with a joint material.

In cases, where the mixture of the multi-component composition is not used for both the bonding material and the joint material, materials known in the prior art can be used as the bonding material or joint material, respectively, for which the multi-component composition is not used.

Materials which can be used as bonding material or joint material, respectively, when for one of these the multi-component composition is not used, are, for instance, epoxy resins, such as water emulsified epoxy resins.

The subfloor can be any suitable substrate. Examples of a suitable subfloor are a screed floor, a concrete floor, a cement floor, a wood floor or a metal floor. The screed floor may be e.g. a cementitious screed or a polymer modified cementitious screed. The subfloor may also be an existing flooring such as e.g. a tiled flooring, a resin coated flooring or a laminate or any other known floor covering. The subfloor is preferably a screed floor.

The subfloor surface to be treated may be treated mechanically to remove existing coatings and decking material and/or cleaned, e.g. by vacuum blasting or similar techniques if necessary, to provide a gripping profile that is clean.

The subfloor may be subjected to a pre-treatment, e.g. by application of at least one of a scratch coat and/or a primer, e.g. for smoothing or improved adhesion, a crack bridging layer and/or water-proofing layer such as bitumen sheets, and/or a protective coating. For the scratch coat or primer e.g. a polymer modified cementitious screed, in particular a polyurethane cementitious hybrid composition, may be used, e.g. the multi-component composition used in the instant invention.

In a preferred embodiment the subfloor is pretreated by applying a scratch coat or primer on the subfloor and optionally by applying a water-proofing layer or crack-bridging layer on the scratch coat or primer before applying the bonding material.

In an optional and preferred embodiment at least one sheet-like material is laid on the subfloor, which is optionally a pretreated subfloor, before applying the bonding material. The sheet-like material may be laid on the freshly applied scratch coat or primer or freshly applied water-proofing layer or crack-bridging layer, if used.

The sheet-like material is preferably a permeable sheet-like material and usually serves for smoothing and/or as a reinforcing layer for the bonding material. The sheet-like material is preferably a fabric, a fleece or a mesh. The fabric or fleece may be e.g. made of glass fibres, mineral fibers or plastic fibers. The mesh may be e.g. a plastic mesh, a glass fibre mesh or a wire mesh. A suitable sheet-like material is e.g. SCHÖNOX®-Rüttelvlies from SCHÖNOX GmbH, Germany or TYPAR SF from DU PONT. The weight /m² of the used sheet material can be variable and is linked to the needed effort like more reinforcement effect can be seen with higher weight /m². The weight can vary between 10 g/m² up to 1000 g/m², preferably 30 g/m² to 600 g/m².

The bonding material is then applied on the subfloor or on the subfloor covered with the sheet-like material. The following is valid when the mixture of the multi-component composition is used as bonding material, but may also apply when other materials are used as bonding material.

The application of the bonding material may be carried out by any common method, e.g. coating, spraying, grouting or puttying. Application by puttying is preferred. Application with a toothed trowel is particularly preferred.

The application quantity of the bonding material may vary in wide ranges, but may be, for instance, in the range of from 1 to 10 kg/m².

When the mixture of the multi-component composition is used as bonding material, the composition is preferably used as an embedding mortar or adhesive.

As conventional, the application of the bonding material may be carried out in a stepwise manner, i.e. the bonding material is applied on a certain region of the subfloor and the placing of the floor covering elements on that region is carried out. Then the bonding material is applied on another, preferably adjacent, region of the subfloor and then the placing of the floor covering elements on that region is carried out. This procedure is repeated until the entire floor covering is obtained.

In the next step the floor covering or a plurality of floor covering elements are placed or laid on the applied bonding material. It is possible that the floor covering is placed or laid on the applied bonding material. Preferably a plurality of floor covering elements is placed or laid on the applied bonding material.

The floor covering or the floor covering elements may be of any material which is conventional for such elements. The floor covering or the floor covering elements may be e.g. made of ceramic, stone, concrete, cement, metal including metal alloys such as aluminium or steel, plastic such as polyvinyl chloride (PVC), vinyl or linoleum, porcelain, ceramic klinker, glass or wood.

Examples of floor covering are sheet flooring materials, e.g. made of plastic such as PVC, vinyl or linoleum, metal such as steel or wood, and screeds, in particular cementitious screeds.

Examples of the floor covering elements are tiles, panels, plates, boards, laminates, wherein tiles are preferred. The floor covering is most preferably a tiled floor covering. Examples of preferred tiles are ceramic tiles, fully vitrified porcelain tiles, ceramic klinker tiles, artificial tiles (resin bonded tiles), stone tiles, glass tiles, granite tiles, quartzstone tiles or plastic tiles, wherein ceramic tiles, fully vitrified porcelain tiles, and ceramic klinker tiles are preferred. The tiles may be completely encased in a protective coating, e.g. a resin coating such as an epoxy resin coating. Further examples of suitable floor covering elements are wood panels, wood laminate, metal plates, e.g. steel plates, stone plates or concrete plates.

The form of the floor covering elements can be any conventional one, such as e.g. square, rectangular or hexagonal. Of course, other more complex patterns and combinations of different patterns are possible.

The floor covering or floor covering elements are placed into the fresh bonding material, i.e. within the open time of the bonding material. The bonding material bonds the floor covering or floor covering elements to the subfloor. After the open time, the bonding property of the fresh bonding material gets lost. Methods of placing or laying, respectively, a floor covering or floor covering elements are well known to the skilled person. Any conventional method can be used. Preferred are the vibrating method or thin bed application.

In the vibrating method, the application of the bonding material and placing of the floor covering element is carried out, when the subfloor, in particular a screed subfloor, is still wet or humid, i.e. the bonding material is applied on a green or fresh subfloor, preferably green or fresh screed. After placement of the floor covering element on the applied bonding material, the elements are vibrated, e.g. by a vibrator including a vibrating plate or vibrating rollers. When using the vibrating method, laying a sheet-like material on the subfloor as discussed above is usually preferred.

In the thin bed application, the application of the bonding material and placing of the floor covering element is carried out on a hardened subfloor, i.e. the bonding material is applied on a cured subfloor. Also in this case, the placed elements are usually vibrated as explained above for the vibrating method. When using thin bed application, laying a sheet-like material on the subfloor as discussed above may be effected or not.

Optionally, as a further step, joints between the placed or laid floor covering elements are grouted with a joint material. If the multi-component composition is used only as joint material, this step is an essential step of the inventive method. The following is valid when the mixture of the multi-component composition is used as joint material, but may also apply when other materials are used as joint material. Suitable other joint materials are e.g. epoxy resins.

Methods of grouting joints are well known to the skilled person. Any conventional method can be used, for instance grouting by injecting or spreading. Thus, the joint material may be injected in the joints. The joint material is preferably spread over the entire floor covering laid to achieve filling of the joints. Excess joint material is then removed from the floor covering. The process may be repeated, if necessary. In particular, when grouting is carried out by the spreading method, it is usually preferred to use a multi-component composition mixture with higher flowability as explained above.

When the mixture of the multi-component composition is used as joint material, the composition is preferably used as joint grout or joint filler.

The application temperature for the multi-component composition, regardless of whether used as bonding material or joint material, is e.g. from about 8 to 40°C, preferably from about 12 to 35°C. The curing time of the multi-component composition may e.g. range from 15 hours to 72 hours depending on the temperature during hardening and the proportion of the components used.

The invention also relates to the floor covering on a subfloor, obtainable by the method of the invention.

The invention also relates to the use of the multi-component composition as a bonding material for bonding a floor covering to a subfloor and/or as a joint material for grouting joints between floor covering elements. The indications given for the inventive method are also valid for the inventive use.

The floor covering obtained has an improved thermal, chemical and mechanical resistance so that it is suitable for places under severe conditions.

The floor covering of the invention is particularly suitable as an industrial floor covering, in particular for a production place in food and drink industry, e.g. in bottling, dairy or meat production, life science industry, e.g. pharmaceutical industry, and even chemical industry or heavy industry.

The invention is further explained in the following experimental part which, however shall not be construed as limiting the scope of the invention. The proportions and percentages indicated are by weight, unless otherwise stated.

### Examples

### Preparation of bonding material FM and joint material JM

A polyol component (A), a hardener component (B) and a solid component (C) each including the ingredients shown in Table 2 are mixed in the weight proportions given in Table 1 to obtain a bedding mortar/adhesive used as the bonding material and a joint filler/grout used as joint material, respectively. Table 2 indicates the weight proportions of the ingredients for the bonding material (bedding mortar/adhesive) and the joint material (joint filler/grout) obtained. Mixing of bonding material and of joint material, respectively, is effected before usage. Thus a bonding material FM and a joint material JM were prepared used for the following preparation of floor coverings.

**Table 1. Mixing proportions of components, all values in parts by weight**

| | | Bonding material FM | Joint material JM |
|---|---|---|---|
| A | Polyol component | 16 | 21 |
| B | Hardener component | 16 | 21 |
| C | Solid component | 68 | 58 |

**Table 2. Proportions of ingredients in mixture, all values in parts by weight**

| | | Bonding material FM | Joint material JM |
|---|---|---|---|
| A | Castor oil | 6.7 | 8.75 |
| | Plasticizer | 2.1 | 3.5 |
| | Defoamer | 0.5 | 0.5 |
| | Triethylene glycol | 1.2 | 1.5 |
| | Pigment | 1.5 | 1.5 |
| | Water | 4 | 5.25 |
| B | MDI (methylene diphenyl diisocyanate) | 16 | 21 |
| C | Silica Sand 0.1 mm - 0.5 mm | 46.5 | 40 |
| | Hydrated lime | 3.5 | 3 |
| | White Cement | 18 | 15 |

### Preparation of a tiled floor covering by thin bed application

An existing concrete floor was cleaned by vacuum blasting. A scratch coat of polyurethane resin cement hybrid composition was applied to a thickness of 1.5 mm. Then the bonding material FM as prepared above was applied as embedding mortar with a minimum consumption of 4.0 kg/m² using a serrated edge trowel (6 x 6 mm) and allowed to penetrate into the substrate. A layer of a plastic mesh was applied into the freshly applied bonding material FM with an overlap of 10 to 20 cm avoiding wrinkles and waves.

Tiles (Argelith® Hexalith®, hexagonal ceramic tiles embedded in epoxy resin, 125 x 108 x 18 mm) were placed into the fresh bonding material FM in a defined formation leaving a joint width of ca. 2.5 mm at the top of the tiles (joint width of the tiles is given by the pre-fabricated spacers of the tiles). A vibration technique is followed immediately in order to level the tiles and allow the bonding material FM to fully bond the ceramic tiles to the substrate.

After about 24 hours, the joints were grouted using joint material JM as prepared above at a minimum consumption of 1.0 kg/m² by spreading method. The grouted surface was cleaned using aggregate and HTC cleaning pad.

Alternatively, the joints were grouted using an epoxy resin based on an epoxy resin component and a amine hardener component (SCHÖNOX®-RB from Schönox GmbH, Germany) at a minimum consumption of 0.5 kg/m² filled with 0.5 kg/m² dry kiln quartz sand 0.3-0.8 mm to the entire surface. The grouted surface was cleaned by emulsifying the SCHÖNOX®-RB resin and using a cleaning sponge.

The total system thickness is about 20.0 mm. The tiled floor covering exhibits very high mechanical resistance, very high impact resistance, high chemical resistance and very high thermal shock resistance, in particular when joint material JM is used. The floor covering is slip-resistant and hygienic.

### Preparation of a tiled floor covering by vibrating method

A polymer modified cementitious screed is prepared to the required level.

A fleece (SCHÖNOX®-Rüttelvlies) or a plastic mesh is applied onto the freshly applied screed to smooth surface of the freshly applied screed with an overlap of 10 to 20 cm avoiding wrinkles and waves. Then the bonding material FM as prepared above is applied onto the fleece or mesh at a minimum consumption of 4.0 kg/m² using a serrated edge trowel (6 x 6 mm) and the bonding material is allowed to penetrate into the substrate.

Tiles (Argelith® Hexalith®, hexagonal ceramic tiles embedded in epoxy resin, 125 x 108 x 18 mm) were placed into the fresh bonding material FM in a defined formation leaving a joint width of ca. 2.5 mm at the top of the tiles (joint width of the tiles is given by the pre-fabricated spacers of the tiles). A vibration technique is followed immediately in order to compress the subfloor and allow the bonding material FM to fully bond the ceramic tiles to the substrate.

After about 24 hours, the joints were grouted using joint material JM as prepared above at a minimum consumption of 1.0 kg/m² by spreading method. The grouted surface was cleaned using aggregate and HTC cleaning pad.

Alternatively, the joints were grouted using an epoxy resin based on an epoxy resin component and a amine hardener component (SCHÖNOX®-RB from SCHÖNOX GmbH, Germany) at a minimum consumption of 0.5 kg/m² filled with 0.5 kg/m² dry kiln quartz sand 0.3-0.8 mm to the entire surface. The grouted surface was cleaned by emulsifying the RB resin and using a cleaning sponge.

The total system thickness is about 63.0 mm. The tiled floor covering exhibits very high mechanical resistance, very high impact resistance, high chemical resistance and very high thermal shock resistance, in particular when joint material JM is used. The floor covering is slip-resistant and hygienic.

### Adhesive tensile strength test

For an adhesive tensile strength test, the multi-component composition according to Table 2 (bonding material) was mixed with the following proportions (A:B:C = 1:1:4): 150 g of polyol component (A), 150 g of hardener component (B) and 600 g of solid component (C), wherein the polyol component (A) is modified for some examples by higher proportion of water and an extender (polyethylene fibres having thixotropic properties; Stellmittel T (from Sika AG, Suisse)) was added to the mixture to adjust the rheological properties as outlined in table 3 below.

**Table 3. Modification of polyol component and amount of extender used**

| | additional amount of water in polyol component (A) of Table 2 | amount extender (in g) |
|---|---|---|
| Ex. 1 | - | 5.5 |
| Ex. 2 | 1 % more water | 5.2 |
| Ex. 3* | 1 % more water | 5.2 |
| Ex. 4 | 30% more water | 5.4 |
| Ex. 5 | 35% more water | 5.2 |
| Ex. 6 | 40% more water | 5.5 |

| | | |
|---|---|---|
| *wet concrete slab as subfloor | | |

The obtained mixture was applied on a screed subfloor as the bonding material. Ten single tiles (non-absorbent ceramics) were placed separately into the fresh bonding material (Specimens I to X). In Ex. 3 a wet concrete slab was placed on the subfloor before applying the mixture.

Adhesion strength after dry storage, heat loading and FTC (freeze/thaw cycles) conditions according to specification according to EN 12004 was determined. The adhesive strength was measured according to EN 1348. Adhesive strength in N/mm² was measured in each case for the ten specimens prepared from which an average value was calculated, except that outliers were not considered. The results are shown in Table 4. The appearance of fracture was also determined and the results are shown in Table 5.

As can be seen from the results, the adhesive tensile strengths essentially fulfill the C1 classification according to EN 12004 classification for cement tile adhesives.

**Table 4. Average adhesive strength (all values in N/mm²)**

| Conditions | Ex. 1 | Ex. 2 +1 % water | Ex. 3 wet concrete slab | Ex. 4 +30% water | Ex. 5 +35% water | Ex. 6 +40% water | min in N/mm² |
|---|---|---|---|---|---|---|---|
| Initial tensile adhesion strength (5 min) | 0.8 | 0.8 | 0.9 | 0.7 | 0.7 | 0.8 | 0.5 |
| tensile adhesion strength after 20 min (open time) | 0.8 | 5.8 | 5.5 | 4.8 | 5.1 | 5.8 | 0.5 |
| tensile adhesion strength after water immersion | 1.3 | 1.3 | 1.4 | 1.2 | 1.3 | 1.1 | 0.5 |
| tensile adhesion strength after heat ageing (70°C) | 0.4 | 0.6 | 0.4 | 0.6 | 0.6 | 1.5 | 0.5 |
| tensile adhesion strength after heat ageing (100°C) | 0.5 | 0.2 | 0.4 | 0.8 | 1.8 | 0.7 | 0.5 |
| tensile adhesion strength after freeze/thaw cycles | 1.7 | 0.9 | 0.7 | 0.7 | 0.7 | 0.6 | 0.5 |

**Table 5. Appearance of fracture**

| Conditions | Ex. 1 | Ex. 2 +1% water | Ex. 3 wet concrete slab | Ex. 4 +30% water | Ex. 5 +35% water | Ex. 6 +40% water |
|---|---|---|---|---|---|---|
| Initial tensile adhesion strength (5 min) | AF-T | AF-T | AF-T | AF-T | AF-T | AF-T |
| tensile adhesion strength after 20 min (open time) | AF-T | CF-S | CF-S | CF-S | CF-S | CF-S/CF-T |
| tensile adhesion strength after water immersion | AF-T | AF-T | AF-T | AF-T | AF-T | AF-T |
| tensile adhesion strength after heat ageing (70°C) | AF-T | AF-T | AF-T | AF-T | AF-T | AF-T |
| tensile adhesion strength after heat ageing (100°C) | AF-T | AF-T | AF-T | AF-T/BT | AF-T/BT | AF-T/BT |
| tensile adhesion strength after freeze/thaw cycles | AF-T | AF-T | AF-T | AF-T | AF-T | AF-T |

| | | | | | | |
|---|---|---|---|---|---|---|
| AF-T: adhesive failure between tile and mixture, CF-S: cohesive failure in substrate, CF-T: cohesive failure in tile | | | | | | |

### Shear strength test

The mixture according to Example 1 above was also subjected to a shear strength test under the following conditions. The results are shown in Table 6.

| | |
|---|---|
| Condition A | after dry storage 7 days standard climate |
| Condition B | after water immersion 7 days standard climate, 21 days water |
| Condition C | after temperature variation 7 days standard climate |

**Table 6. Shear strength in N/mm²**

| Condition | Specimen | | | | | | |
|---|---|---|---|---|---|---|---|
| | I | II | III | IV | V | VI | Mean value |
| A | 0.50 | 0.56 | 0.28 | 0.35 | 0.41 | 0.43 | 0.42 |
| B | 0.44 | 0.81 | 0.58 | 0.96 | 0.90 | 0.85 | 0.76 |
| C | 0.17 | 0.48 | 0.49 | 0.24 | - | - | 0.35 |

### Adhesive tensile strength test

For a further adhesive tensile strength test, the multi-component composition according to Table 2 (bonding material) was mixed with the following proportions (A:B:C = 1:1:5) for Examples 7 to 9, and an extender was added to the mixture to adjust the rheological properties as outlined in table 7 below.

**Table 7.**

| | extender | amount extender (wt.%, based on total weight of components A), B) and C) |
|---|---|---|
| Ex. 7 | polyethylene fibres (thixotropic); Stellmittel T from Sika AG, Suisse | 0.1 wt.% |
| Ex. 8 | dispersible polymer powder based on vinyl esters, ethylen and acrylic ester; Vinnapas 7220 E | 1 wt.% |
| Ex. 9 | polyethylene fibres (thixotropic); Stellmittel T from Sika AG, Suisse | 0.2 wt.% |

The obtained mixture was applied on a screed subfloor as the bonding material. Ten single tiles (non-absorbent ceramics) were placed separately into the fresh bonding material (Specimens I to X).

Adhesion strength after dry storage, heat loading and FTC (freeze/thaw cycles) conditions according to specification according to EN 12004 was determined. The adhesive strength was measured according to EN 1348. Adhesive strength was measured in each case for the ten specimens prepared from which an average value was calculated. The results are shown in Table 8. The appearance of cracks was also determined and the results are also shown in Table 8.

**Table 8. Average adhesive tensile strength/cracks appearance**

| Conditions | Ex. 7 | Ex. 8 | Ex. 9 |
|---|---|---|---|
| 28d NC | | | |
| tensile strength [N/mm²] | >4.0 | >3.2 | >2.8 |
| after water immersion (wet storage) | | | |
| tensile strength [N/mm²] | 0.80 | 0.79 | 1.05 |
| after freeze/thaw cycles | | | |
| tensile strength [N/mm²] | 0.68 | 0.64 | 0.69 |
| 14d NC + 7d 100°C (tested hot) | | | |
| tensile strength [N/mm²] | >1.31 | 0.7 | >1.07 |
| 14d NC + 7d 100°C (tested after cooling) | | | |
| tensile strength [N/mm²] | 1.97 | 1.31 | 1.82 |
| 70°C warm storage | | | |
| tensile strength [N/mm²] | >3.0 | >3.2 | >3.1 |
| after 20 min (open time) (absorbing tile) | | | |
| tensile strength [N/mm²] | 3.36 | >4.1 | >4.21 |

| | | | |
|---|---|---|---|
| * NC = normal climate | | | |

As can be seen excellent results with respect to tensile strengths are obtained. Thus, the adhesive tensile strengths essentially fulfill the C2 classification according to EN 12004 classification for cement tile adhesives.

## Claims

1. A method for laying a floor covering on a subfloor, the method comprises
applying a bonding material on the subfloor, and
placing the floor covering or a plurality of floor covering elements on the applied bonding material and optionally
grouting joints between the floor covering elements with a joint material, **characterized in that**
a mixture of the components of a multi-component composition comprising
A) a polyol component comprising at least one polyol and water,
B) a hardener component comprising at least one polyisocyanate, and
C) a solid component comprising a hydraulic binder and one or more aggregates
is used as the bonding material and/or the joint material.

2. The method according to claim 1, wherein the mixture of the multi-component composition is used as the bonding material or as the bonding material and the joint material.

3. The method according to claim 1 or claim 2, wherein the floor covering elements are tiles, panels, plates, boards or laminates, preferably tiles.

4. The method according to any one of claims 1 to 3, wherein the mixture of multi-component composition is an embedding mortar, adhesive, joint grout or joint filler.

5. The method according to any one of claims 1 to 4, wherein the subfloor is a screed floor, a concrete floor, a cement floor, a wood floor, a metal floor or an existing flooring.

6. The method according to any one of claims 1 to 5, wherein the subfloor is pretreated by applying a scratch coat or primer and/or a water-proofing layer or crack-bridging layer before applying the bonding material.

7. The method according to any one of claims 1 to 6, wherein at least one sheet-like material, preferably a fabric, a fleece or a mesh, is laid on the subfloor before applying the bonding material.

8. The method according to any one of claims 1 to 7, wherein the floor covering elements are placed by a vibrating method or a thin bed application.

9. The method according to any one of claims 1 to 8, wherein the amount of the solid component is in the range of from 80 to 35 % by weight, preferably 80 to 60 % by weight, more preferably 80 to 67.5 % by weight, based on the total weight of the multi-component composition.

10. The method according to any one of claims 1 to 9, wherein the floor covering or floor covering elements are placed into the fresh bonding material.

11. The method according to any one of claims 1 to 10, wherein the polyol component comprises castor oil as polyol, the hardener component comprises methylene diphenyl diisocyanate as polyisocyanate, and/or the solid component comprises cement as hydraulic binder.

12. The method according to any one of claims 1 to 11, wherein the multi-component composition comprises at least one extender, preferably in an amount of 0.05 to 2.0% by weight, more preferably 0.1 to 1.5% by weight, based on the total weight of components A), B) and C) excluding the extender.

13. Floor covering on a subfloor, obtainable by a method according to any one of claims 1 to 12, preferably an industrial floor covering.

14. Use of a multi-component composition as a bonding material for bonding a floor covering to a subfloor and/or as a joint material for grouting joints between floor covering elements, wherein the multi-component composition comprises
A) a polyol component comprising at least one polyol and water,
B) a hardener component comprising at least one polyisocyanate, and
C) a solid component comprising a hydraulic binder and one or more aggregates.

15. Use according to claim 14, wherein the floor covering is an industrial floor covering, in particular for a production place in food or drink industry, life science industry, chemical industry or heavy industry.

16. Use according claim 15, wherein the multi-component composition comprises at least one extender.
